# EUROPEAN PATENT APPLICATION

(11) **EP 3 812 289 A1**
(43) Date of publication of application: **28.04.2021**
(21) Application number: 19425074.2
(22) Date of filing: 22.10.2019
(51) Int. Cl.: B65B 57/00, B65B 57/18, B65B 59/00, B65B 65/00, B65B 65/02, B65B 67/00, H02K 37/24

(54) **FORMAT CHANGE DRIVING DEVICE**

(71) Applicant: Siempharma S.r.l., 04011 Aprilia (LT) (IT)
(72) Inventor: Enderle, Emanuele, 04011 Aprilia (LT) (IT)
(74) Representative: Banchetti, Marina

(57) **Abstract**

The present invention relates to a motor device (100) to actuate the automatic format change in a packaging machine, comprising actuating means (20; 30) configurated to actuate a size change adjustment and transmitting means (27; 37) configured to transmit motion from said actuating means (20; 30) to the spacer system of the automatic machine configured for format change. The actuating means comprises at least one motor (30) and said transmitting means comprises at least a transmitting shaft (37) of the motor (30) configured to allow an automatic actuation of the spacer system for the format change, wherein said transmitting means comprises a transmitting element (27) activated, or activatable, manually and independently from the transmitting shaft (37) of the motor (30), to allow an adjustement of the format change of the machine also in the event of motor (30) malfunction.

## Description

### Technical field of the invention

The present invention relates to a motor device, in particular a motor device for the automatic format change in packaging machines.

### State of the art

The automatic machines, in particular the automatic packaging machines, comprise groups for the format change of the processed products.

In the prior art, the dimensional adjustment of these structures is managed manually, for example by means of steering wheels or cranks to increase or decrease the relative distance between the main reference axes of the group for the format change.

The drawback of the manual format change is that an operator must maneuvring each crank, or steering wheel, to adjust the relative distance between the main axes of the positioning structure, making the format change operations a sort of bottleneck in terms of times, of efficiency, and therefore of costs for the entire production process.

Furthermore, manual handling may generate adjustment errors due to the inexperience, or simple distraction, of the operator.

To allow a greater control and at the same time an increase in the speed and efficiency of the format change adjustment operations, the steering wheels or cranks for manual adjustment can be replaced by motors for the automatic adjustment of the format change.

A drawback of this solution is that when a malfunction occurs, for example when a motor is in a stalling condition, or it is displaced with respect to the nominal values of use, in most cases, it is necessary to intervene, replacing the motor, with considerable loss of time and lack of production.

Therefore, in addition to the cost of the motor, it has to be considered the cost of the machine downtime, necessary to allow the supply and assembly of the replacing motor.

Even in automatic operations, therefore, the presence of a stalling motor is to be considered a sort of bottleneck in terms of time, efficiency, and therefore of costs for the entire production process.

A further drawback is that in the event of a motor malfunction, the machine may continue to operate causing the non conformity of a product and/or the consequent risk of damage to the machine.

### Summary of the invention

Therefore, the technical problem presented and solved by this invention is that of providing a motor device for the automatic format change which allows to obviate the drawbacks mentioned above with reference to the prior art.

This problem is solved by a motor device according to claim 1.

Preferred features of the present invention are detailed in the depending claims.

The present invention provides some relevant advantages.

In particular, the characteristic to give a motor device manually adjustable, allows to ensure a rapid recovery of the automatic format change, and of the production of the packaging machine, in any operating condition.

Advantageously, the possibility to change the actuation of the device from automatic to manual, and vice versa, allows to reduce the risks of production waste or productivity losses due to prolonged machine downtime, when a malfunction of the driving motor of the machine, or a voltage drop in the electrical supply, occurs.

A further advantage is that the device is dimensionally compact and in particular the manual adjustment means are removable, allowing the application of the motor device even in areas of the machine which require a reduced size.

Other advantages, features and methods of use of the present invention will result evident from the following detailed description of some embodiments, presented by way of example and not of limitation.

### Description of the figures

Reference will be made to the figures of the accompanying drawings, in which:
Figure 1 shows an adjustment device of a known type;
Figure 2 shows a perspective view of an embodiment of the motor device according to the present invention;
Figure 3 shows a side view of the motor device of Figure 1;
Figure 4 shows a schematic view of some components of the motor device of Figure 1;
Figure 5 shows a front view of the motor device of Figure 1.

### Detailed description of preferred embodiments

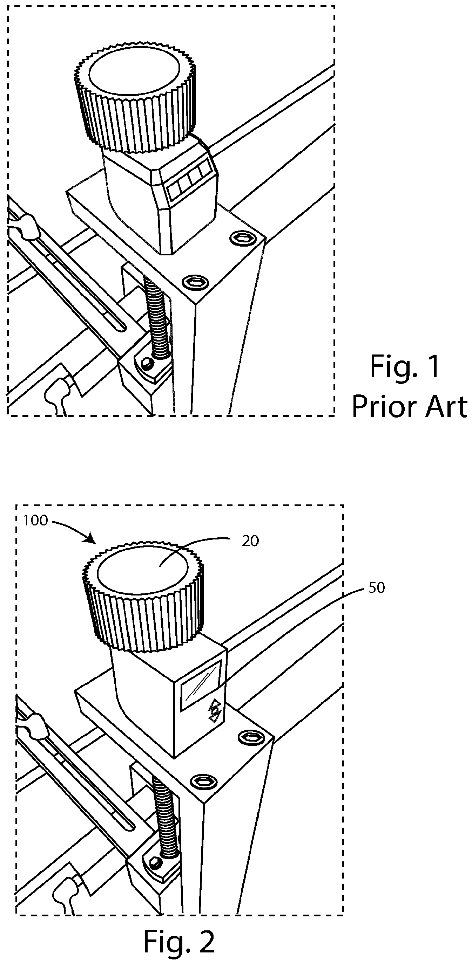

With reference to Figure 1, a motor device for actuating the automatic format change in a packaging machine, according to a first preferred embodiment of the invention, is generally denoted by 100.

The motor device 100 of the present example is shaped to be positioned at the main axes of a product positioning and/or processing station, to allow the automatic format change.

As shown in the figures, the motor device 100 comprises actuating means configured to drive an automatic format change adjustment and transmitting means configured to transmit the motion, from the actuating means, to a spacer system of the automatic machine configured for the automatic format change.

The motor device 100 advantageously has a motor 30.

In particular, the motor 30 is a stepping motor, to ensure a small encumbrance, or a brushless motor, to ensure a longer working life compared to the brushed motors.

The transmitting means comprises at least a transmitting shaft 37 of the motor 30, configured to allow an automatic actuation of the spacer system for the format change.

The transmitting shaft 37 is connected, for example by means of specific reduction means not shown, to the spacer system for the format change so as to transfer the motion and allow its actuation.

Advantageously, the transmitting means further comprises a transmitting element 27, activated or activatable manually and independently of said transmitting shaft 37.

In a preferred embodiment, the motor device 100 comprises friction means, not shown in the figures, which allows the exclusion of the motor 30 in the movement of the transmitting shaft 37 when the manual transmitting element 27 is operated.

In an alternative embodiment, the transmitting element 27 is shaped like a hollow cylinder, configured to contain the transmitting shaft 37 so that to guarantee the possibility of an independent activation of the manual hollow cylinder in the event of impossibility to move the transmitting shaft managed by the motor.

Advantageously, the motor device 100 comprises position transducer means 40, configured to provide an incremental or analogical electrical signal.

In the preferred embodiment, an encoder 40 coupled to the brushless motor 30 is provided for detecting the angular position of the transmitting shaft 37. In the event of a malfunction, the encoder 40 detects a value indicative of a current state of the motor.

In particular, the encoder 40 is absolute in such a way as to guarantee the memory maintenance of the position value detected even in the absence of power supply.

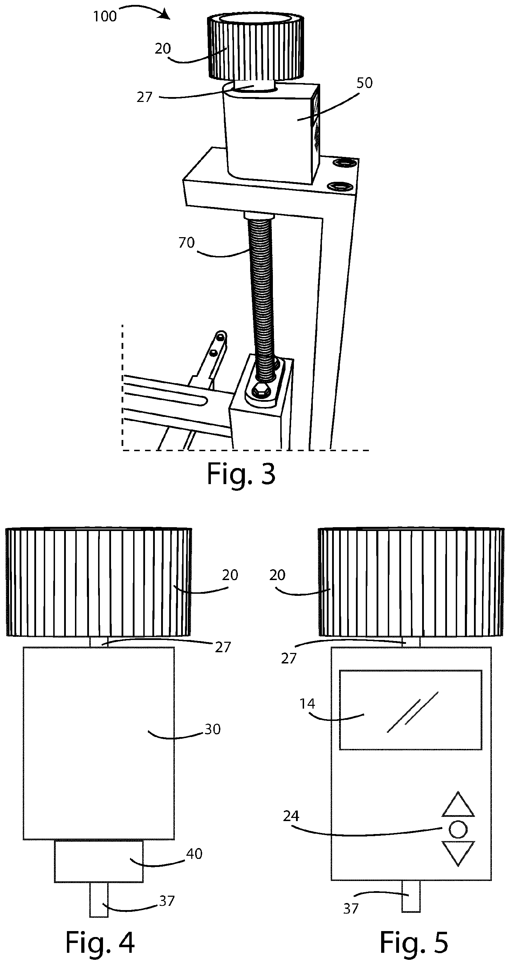

Preferably, as shown in Figure 5, according to the invention the device 100 comprises a counter element 14, in particular a digital counter, configured to display a current state detected by the encoder 40.

In the preferred embodiment, the motor device 100 provides a manual maneuvring element 20 coupled or that can be coupled to the transmitting element 27 to allow a manual actuation of the spacer system for the automatic format change.

In particular, as shown in the figures, the maneuvring element 20 has a cylindrical conformation, for example has a knurled side surface so as to allow the gripping and handling by a user.

In alternative embodiments, the maneuvring element 20, which can be sized according to the specific needs of the machine overall dimensions, has different conformations.

For example, in some cases it could be convenient to have an oblonging conformation as a lever that can be operated remotely, with a main extension parallel or perpendicular to the transmitting shaft 37, according to the specific space requirements imposed by the machine design.

Preferably, to optimize the compactness of the motor device 100, the maneuvring element 20 is removable. Therefore, the operator can insert the maneuvring element 20 in the motor device 100 only when the activation of the motion transmitting shaft is actually required.

To indicate an error state of the motor 30, in particular detected by the encoder 40, the motor device 100 comprises alarming means 24, for example ringing or lighting.

Preferably, to allow the identification of an error on the machine even in a noisy work location, the alarming means 24 comprises at least one light source, for example a red LED, configured to visually indicate the error status of the motor 30.

In case of a block of the automatic format change, for example in the presence of a malfunction of the motor 30 and/or of a voltage drop of the supply of the automatic machine, the invention according to the present invention advantageously allows the indication of an operator intervention request.

The operator can then quickly identify the blocked device and act manually.

By means of the manual maneuvring element 20, the operator can restore the optimal use conditions, in case of temporary malfunction of the motor 30.

In case of more serious malfunction, and in case of impossibility of a quickly restoring of the motor 30, by means of the manual maneuvring element 20, the operator can proceed with the format change, completely replacing the automatic operation with the manual operation, guaranteeing the productivity of the machine up to the replacement of the malfunctioning motor.

A preferred embodiment of the motor device 100 comprises a supply line for supplying the counter 14, separated from the electric power supply of the motor, not shown in the figure.

In particular, safety devices are provided, for example magneto-thermal switches, at the motor 30 and at the counter 14, so as to be able to electrically isolate the motor 30 in the event of a malfunction or short circuit and any-way guarantee the flow of electric current on the counter 14.

Advantageously, also the aforementioned alarming means 24 are powered by the same supply line as the counter 14.

The separated power supply dedicated to the counter 14, and to the alarming means 24, allows their operation even in the event of malfunction or short circuit of the motor 30.

As shown in Figure 4, in addition to the main light source 24, preferably a red-colored LED, on a front mask 50 of an outer casing of the motor 30, at least one further light source is positioned to indicate to the user the specific manual adjustment required.

For example, in the preferred embodiment, a first and a second arrow are provided to indicate the request for a clockwise or anti-clockwise movement of the transmitting element 27 through the manual maneuvring element 20.

Advantageously, the device according to the present invention can be provided in the form of a kit, comprising at least one motor device 100 as described above and a plurality of maneuvring elements 20, for example having different conformations, configured to be coupled to the transmitting element 27 to allow a manual activation of the spacer system for automatic format change.

The present invention also relates to a motor system to actuate the automatic format change in a packaging machine, comprising one or more motor devices 100, a data bus for connecting the motor devices 100 and a central processing unit CPU to manage the automatic operation of said motor devices 100.

The present invention has been described with reference to preferred embodiments. It is to be understood that there may be other embodiments which refer to the same inventive core, as defined by the protection scope of the claims set below.

## Claims

1. Motor device (100) to operate the automatic format change in a packaging machine, comprising:
- actuating means (20; 30) configured to actuate a format change adjustment;
- transmitting means (27; 37) configured to transmit the motion from said actuating means (20; 30) to the spacer system of the automatic machine configured for the format change;
wherein said actuating means comprise at least one motor (30) and said transmitting means comprise at least a transmitting shaft (37) of said motor (30) configured to allow an automatic actuation of the spacer system for the format change, said transmitting means further comprising a transmitting element (27) activated, or activatable, manually and independently from said transmitting shaft (37).

2. Motor device (100) according to the preceding claim, comprising a maneuvring element (20) coupled or couplable to said transmitting element (27) to allow a manual actuation of the spacer system for the format change.

3. Motor device (100) according to the preceding claim, wherein said maneuvring element (20) is removable.

4. Motor device (100) according to anyone of the preceding claims, comprising positioning transducer elements (40), configured to provide an incremental, or analogical, electric signal.

5. Motor device (100) according to the preceding claim, wherein said transducer elements (40) comprise an absolute encoder.

6. Motor device (100) according to anyone of the preceding claims 4 or 5, comprising a counter element (14) configured to indicate a current state of said transducer elements (40).

7. Motor device (100) according to the preceding claim, comprising a power source, separated from the power source of the motor (30), to supply said counter (14).

8. Motor device (100) according to anyone of the preceding claims, comprising alarming means (24) configured to report an error state of the motor (30).

9. Motor device (100) according to the preceding claim, wherein said alarming means (24) comprises at least a light source to report visually the error state of the motor (30).

10. Motor device (100) according to anyone of the preceding claims, wherein said motor (30) is a stepping or a brushless motor.

11. Motor system for actuating the format change in an automatic packaging machine, comprising one or more motor devices (100) according to any of the claims from 1 to 8, a data bus to connect said motor devices (100), and a central processing unit (CPU) for managing the automatic actuation of said motor devices (100).
